(19) Europäisches Patentamt
European Patent Office
Office européen des brevets

(11) **EP 2 877 352 B1**

(12) **EUROPÄISCHE PATENTSCHRIFT**

(45) Veröffentlichungstag und Bekanntmachung des Hinweises auf die Patenterteilung:
**25.05.2016 Patentblatt 2016/21**

(21) Anmeldenummer: **13740239.2**

(22) Anmeldetag: **18.07.2013**

(51) Int Cl.:
***B60C 23/04*** *(2006.01)*     ***B60C 23/06*** *(2006.01)*
***G01M 17/02*** *(2006.01)*     ***B60C 11/24*** *(2006.01)*

(86) Internationale Anmeldenummer:
**PCT/EP2013/065165**

(87) Internationale Veröffentlichungsnummer:
**WO 2014/016195 (30.01.2014 Gazette 2014/05)**

(54) **VERFAHREN UND VORRICHTUNG ZUM SCHÄTZEN EINER PROFILTIEFE EINES REIFENS**

METHOD AND DEVICE FOR ESTIMATING A PROFILE DEPTH OF A TYRE

PROCÉDÉ ET DISPOSITIF DESTINÉS À ESTIMER UNE PROFONDEUR DE SCULPTURE D'UN PNEUMATIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.07.2012 DE 102012212934**

(43) Veröffentlichungstag der Anmeldung:
**03.06.2015 Patentblatt 2015/23**

(73) Patentinhaber: **Continental Automotive GmbH
30165 Hannover (DE)**

(72) Erfinder:
• **KRETSCHMANN, Matthias
93059 Regensburg (DE)**
• **HAAS, Thomas
93093 Donaustauf (DE)**

(56) Entgegenhaltungen:
**WO-A1-2012/091719**     **DE-A1-102006 028 411**
**JP-A- 2007 153 034**     **US-A- 5 749 984**

## Beschreibung

Die vorliegende Erfindung betrifft ein Verfahren sowie eine Vorrichtung zum Schätzen einer Profiltiefe eines Reifens eines Fahrzeugs während eines Betriebs des Fahrzeugs.

Die Profiltiefe eines Reifens hat maßgeblichen Einfluss auf das Verhalten eines Kraftfahrzeugs. Dies gilt insbesondere in kritischen Fahrsituationen. Einerseits ist der maximale Kraftschluß zwischen Reifen und Straße stark von den jeweiligen Straßenbeschaffenheiten abhängig. Andererseits kann der Kraftschluß für die jeweiligen Verhältnisse durch diverse Reifeneigenschaften optimiert werden. Hierzu gehören eine für die jahreszeitlichen Temperaturverhältnisse abgestimmte Gummimischung, ein optimal eingestellter Reifendruck und ein für die Witterungsverhältnisse optimiertes Reifenprofil. Die Effektivität des Reifenprofils ist maßgeblich durch die Profiltiefe bestimmt.

Letztlich kann nur eine ausreichende Profiltiefe den bestmöglichen Kraftschluß zwischen Reifen und Fahrbahn speziell in kritischen Fahrsituationen gewährleisten. Aus diesem Grunde schreiben viele Gesetzgeber eine Mindestprofiltiefe vor. Diese Mindestprofiltiefe kann von Land zu Land und darüber hinaus auch saisonbedingt variieren. Der Mindestwert liegt bei 1.0mm; häufig liegt der Wert bei 1.6mm; maximal findet man 6.0mm bei winterlichen Verhältnissen in der Ukraine. In Regionen, in denen sowohl mit Sommer- als auch mit Winterreifen gefahren wird, geschieht die Überprüfung, ob die entsprechenden Mindestprofiltiefen vorhanden sind, in der Regel zweimal jährlich beim saisonbedingten Reifenwechsel und wird dabei durch die entsprechende Werkstatt durchgeführt. Die Messung geschieht im Allgemeinen mit mechanischen Profiltiefenmessern an mehreren Stellen eines jeden Rades. In Ländern, in denen mit Alljahresreifen gefahren wird, kann es jedoch vorkommen, dass die Reifen überhaupt nicht überprüft werden. Somit ist man im täglichen Fahrzeugbetrieb weit von einer systematischen Profiltiefenüberwachung entfernt. Dies kann zu kritischen Fahrsituationen führen, die letztlich in vermeidbaren Unfällen resultieren.

Die DE 10 2008 002 722 A1 beschreibt ein Verfahren zum Schätzen einer Profiltiefe eines Reifens, das während des Betriebs des Fahrzeugs durchgeführt werden kann. Es beruht darauf, dass Daten eines im Reifen angeordneten Beschleunigungssensors ausgewertet werden.

Die EP 1 225 066 A2 offenbart ebenfalls ein Verfahren für die Profiltiefenschätzung während des Abrollens des Reifens. Es beruht darauf, dass die durch das Profil erzeugten Körperschwingungen bzw. Körperschallschwingungen des Reifens oder der Fahrwerks- oder Karosserieteile detektiert werden. Dies kann beispielsweise durch einen Schwingungssensor an Karosserie- oder Fahrwerksbauteilen erfolgen oder durch ein Mikrofon, das in der Nähe des Reifens angeordnet ist.

Das Profiltiefenschätzungsverfahren nach der EP 1 314 580 A1 beruht auf magnetisch leitfähigen, insbesondere ferromagnetischen Elementen, die im Laufstreifen des Reifens in unterschiedlichen Positionen untergebracht sind. Durch die Abnutzung des Profils verliert der Laufstreifen diese magnetisch leitfähigen Elemente. Eine Auswerteeinheit in der Nähe des Reifens kann die Menge des magnetisch leitfähigen Elements detektieren und so auf die Profiltiefe schließen.

Die DE 10 2008 057 542 A1 offenbart ein Profiltiefenschätzungsverfahren, das während des Betriebs des Fahrzeugs ausgeführt werden kann und auf einer Laser-Sendeeinheit und einer Empfangseinheit in Form einer Fotodiode beruht.

Aus der DE 10 2006 028 411 A1 ist ein Verfahren zum Schätzen einer Profiltiefe eines Reifens eines Fahrzeugs gemäß dem Oberbegriff des Anspruchs 1 bekannt.

Aus der JP 2007 153 034 A ist eine Reifenabnutzungs-Beurteilungsvorrichtung bekannt.

Aus der US 5 749 984 A sind ein System und ein Verfahren zum Überwachen und Messen des Verbiegungsgrades eines Reifens bekannt.

Ausgehend von diesem Stand der Technik ist es eine Aufgabe der vorliegenden Erfindung, ein weiteres Verfahren zum Schätzen einer Profiltiefe eines Reifens eines Fahrzeugs bereitzustellen, das während eines Betriebs des Fahrzeugs durchgeführt werden kann. Darüber hinaus ist es eine Aufgabe der vorliegenden Erfindung, eine entsprechende Vorrichtung zur Durchführung des Verfahrens vorzuschlagen.

Die genannten Aufgaben werden durch die Gegenstände der unabhängigen Patentansprüche gelöst. Die abhängigen Patentansprüche geben Ausführungsformen der Erfindung an.

Dementsprechend umfasst die Erfindung ein Verfahren zum Schätzen einer Profiltiefe eines Reifens eines Fahrzeugs während eines Betriebs des Fahrzeugs. Das erfindungsgemäße Verfahren verwendet eine Piezoelement, das an einer Innenseite des Reifens in einem Bereich angeordnet ist, der bei einem Latschdurchlauf verformt wird. Die Innenseite des Reifens ist dabei in einem breiten Sinne zu verstehen. Beispielsweise kann es sein, dass das Piezoelement an die Innenseite des Reifens geklebt oder auch in den Reifen einvulkanisiert ist. Besondere Vorteile ergeben sich, wenn das Piezoelement in der Nähe der sogenannten neutralen Faser angeordnet wird. Die neutrale Faser kann als ein in die Gummimischung eingebettetes Gewebe verstanden werden, welches sich verformen, aber nicht strecken oder kürzen kann. Das erfindungsgemäße Verfahren misst Signale des Piezoelements und vergleicht aus den Signalen abgeleitete Ist-Daten mit Vergleichsdaten. Die Vergleichsdaten umfassen Datensätze, die jeweils für eine Profiltiefe des Reifens zu erwartende Ist-Daten angeben. Aufgrund des Vergleichs der Ist-Daten mit den Vergleichsdaten wird die Profiltiefe des Reifens geschätzt.

Eine grundlegende Idee der Erfindung ist es, dass sich die Signale eines Piezoelements bei einem Latschdurchlauf in Abhängigkeit der Profiltiefe des Reifens verändern. Mithilfe des Piezoelements kann die Profiltiefe des Reifens verlässlich und kostengünstig geschätzt werden.

In einer Ausführungsform ermittelt das erfindungsgemäße Verfahren einen Datensatz der Vergleichsdaten, der die größte Ähnlichkeit mit den Ist-Daten aufweist. Die Profiltiefe wird dann durch Ermitteln einer dem Datensatz zugeordneten Profiltiefe geschätzt. Auf diese Weise kann die Profiltiefe einfach ermittelt werden.

Je nach Ausführungsform werden aus den gemessenen Signalen Ist-Daten abgeleitet. In einer Ausführungsform werden als Signale Spannungswerte des Piezoelements gemessen und der Schritt des Ableitens von Ist-Daten aus den gemessenen Signalen umfasst eine Kompensation der gemessenen Spannungswerte um mindestens einen Einflussfaktor. Beispielsweise nimmt durch die Messschaltung eine Spannung am Piezoelement relativ schnell ab. Die Ladungsverluste, die durch das Messen der Spannungswerte entstehen, können entsprechend kompensiert werden, um möglichst exakte Signale zu liefern. Auch der im Reifen vorliegende Luftdruck, die Temperatur, die Reifensteifigkeit oder die Beladung des Fahrzeugs können auf die vom Piezoelement gelieferten Spannungswerte Einfluss nehmen, so dass auch hier eine entsprechende Kompensation vorgesehen werden kann. Durch den zusätzlichen Schritt des Kompensierens werden genauere Messergebnisse möglich.

In einer Ausführungsform entspricht jeder Datensatz einer Kennlinie, die für jeweilige Drehwinkel des Piezoelements bei der dem Datensatz zugeordneten Profiltiefe zu erwartende Ist-Daten angibt. Unter einem Drehwinkel des Piezoelements soll dabei ein Drehwinkel verstanden werden zwischen einem Schenkel, der sich von einem Mittelpunkt des Reifens durch das Piezoelement erstreckt, und einem Bezugsschenkel, der sich von Mittelpunkt des Reifens in eine vorherbestimmte Richtung erstreckt. Bei dieser vorherbestimmten Richtung kann es sich beispielsweise um eine Richtung handeln, die vom Mittelpunkt des Reifens lotrecht nach oben oder auch lotrecht nach unten zeigt.

Bei dieser Ausführungsform werden die Ist-Daten mit den Kennlinien insbesondere in einem Drehwinkelbereich des Piezoelements verglichen, in dem ein Latscheintritt des Piezoelements und/oder ein Latschaustritt des Piezoelements erfolgt. Diese Ausführungsform ist besonders vorteilhaft, weil die Signale des Piezoelements oder die daraus abgeleiteten Ist-Daten eine besonders einfache Schätzung der Profiltiefe des Reifens erlauben.

Erfindungsgemäß umfasst der Schritt des Ableitens von Ist-Daten aus den gemessenen Signalen die Schritte Ermitteln eines ersten Summenwertes durch Akkumulieren von Signalen, die einer schwächeren Krümmung des Piezoelements als einer Normalkrümmung des Piezoelements entsprechen, und/oder Ermitteln eines zweiten Summenwerts durch Akkumulieren von Signalen, die einer stärkeren Krümmung des Piezoelements als einer Normalkrümmung des Piezoelements entsprechen. In der Regel erfährt das Piezoelement eine schwächere Krümmung als eine Normalkrümmung, wenn sich das Piezoelement im Latsch befindet. Eine stärkere Krümmung erfährt das Piezoelement hingegen in der Regel während des Latscheintritts und des Latschaustritts. Zwischen dem ersten und dem zweiten Summenwert kann dabei ein Verhältnis ermittelt werden.

Zur Auswertung der so abgeleiteten Ist-Daten können die Vergleichsdaten für verschiedene Profiltiefen zur erwartende erste Summenwerte oder zu erwartende Verhältnisse zwischen dem ersten und zweiten Summenwert angeben.

Durch die Bildung von Summenwerten ist das Verfahren besonders robust gegenüber vereinzelten Messfehlern, da Messwerte über viele Radrotationen hinweg akkumuliert werden können, bevor eine Zuordnung zu den entsprechenden Vergleichsdaten erfolgt.

Der Schritt des Ableitens von Ist-Daten aus den gemessenen Signalen kann ebenfalls den Schritt umfassen Ermitteln eines geometrischen Verlaufs des Piezoelements bei einem Abrollen des Reifens. In diesem Falle geben die Vergleichsdaten vorzugsweise zu erwartende geometrische Verläufe des Piezoelements in Abhängigkeit der Profiltiefe an. Eine Schätzung der Profiltiefe kann dann durch einen Vergleich des ermittelten geometrischen Verlaufs des Piezoelements mit den entsprechenden Vergleichsdaten erfolgen.

In einer Ausführungsform umfasst der Schritt des Ableitens von Ist-Daten aus den gemessenen Signalen den Schritt Spektralanalyse der gemessenen Signale, um die in den Signalen enthaltenen Frequenzen und deren Amplituden zu ermitteln. In diesem Fall geben die Vergleichsdaten vorzugsweise für verschiedene Profiltiefen zu erwartende Frequenzen und deren Amplituden an. Eine Schätzung der Profiltiefe kann dann durch einen Vergleich der gemessenen Frequenzen und ihrer Amplituden mit den Vergleichsdaten erfolgen.

Dabei werden vorzugsweise nur diejenigen gemessenen Signale der Spektralanalyse unterzogen, die in einem Drehwinkelbereich des Piezoelements entstehen, der in einer Drehrichtung des Reifens zwischen einem Drehwinkel, bei dem ein Latschaustritt des Piezoelements erfolgt, und einem Drehwinkel, bei dem ein Latscheintritt des Piezoelements erfolgt, liegt. Der Drehwinkelbereich des Piezoelements, der dem Latsch des Reifens entspricht, wird also nicht einbezogen, da es in diesem Drehwinkelbereich aufgrund des direkten Kontaktes zur Straße nur zu geringen Schwingungen kommt. In der Praxis kann es zu einer Konvolution der Schwingungen, die während des Latschdurchlaufes entstehen, mit den übrigen Schwingungen kommen. Um die gewünschten Schwingungen herauszufiltern, kann ein homomorphes Filter eingesetzt werden.

Zusätzlich umfasst die Erfindung ein Verfahren zum Warnen eines Fahrers des Fahrzeugs mit den Schritten des erfindungsgemäßen Verfahrens zum Schätzen einer Profiltiefe eines Reifens eines Fahrzeugs während eines Betriebs des Fahrzeugs sowie die Schritte Vergleichen der geschätzten Profiltiefe mit einem Schwellwert und Ausgeben eines Warnsignals an den Fahrer, wenn die geschätzte Profiltiefe den Schwellwert unterschreitet. Auf diese Weise ist es möglich, eine Profiltiefe des Reifens nicht nur zu schätzen, sondern den Fahrer des Fahrzeugs entsprechend zu warnen, wenn die Profiltiefe zu gering ist.

Außerdem umfasst die vorliegende Erfindung eine entsprechende Vorrichtung zum Schätzen einer Profiltiefe eines Reifens eines Fahrzeugs während eines Betriebs des Fahrzeugs. Die erfindungsgemäße Vorrichtung umfasst dabei eine Messeinrichtung zum Messen von Signalen eines Piezoelements, wobei das Piezoelement an einer Innenseite des Reifens in einem Bereich angeordnet ist, der bei einem Latschdurchlauf verformt wird. Die erfindungsgemäße Vorrichtung weist zusätzlich eine Vergleichseinrichtung auf zum Vergleichen von aus den Signalen abgeleiteten Ist-Daten mit Vergleichsdaten sowie eine Schätzeinrichtung zum Schätzen der Profiltiefe aufgrund des Vergleichs der Ist-Daten mit den Vergleichsdaten. Die Vergleichsdaten enthalten dabei Datensätze, die jeweils für eine Profiltiefe zu erwartende Ist-Daten angeben.

Zudem umfasst die Vorrichtung Mittel zum Ableiten von Ist-Daten aus den gemessenen Signalen. Diese Mittel umfassen wiederum Mittel zum Ermitteln eines ersten Summenwertes durch Akkumulieren von Signalen, die einer schwächeren Krümmung des Piezoelements als einer Normalkrümmung des Piezoelements entsprechen, und/oder Mittel zum Ermitteln eines zweiten Summenwerts durch Akkumulieren von Signalen, die einer stärkeren Krümmung des Piezoelements als einer Normalkrümmung des Piezoelements entsprechen.

Die Merkmale der Erfindung wurden in Bezug auf ein Verfahren und/oder mit Bezug auf eine Vorrichtung beschrieben. Sofern nicht explizit anders angegeben, können Verfahrensmerkmale mit Vorrichtungsmerkmalen und Vorrichtungsmerkmale mit Verfahrensmerkmalen kombiniert werden. Insbesondere umfasst die erfindungsgemäße Vorrichtung entsprechende Mittel zur Durchführung der entsprechenden Verfahrensschritte. Auch sonstige Merkmale des Verfahrens finden ihren Niederschlag in entsprechenden Ausführungsformen der Vorrichtung. Um die Beschreibung der Erfindung nicht unnötig zu vergrößern, wird auf eine Wiederholung der Verfahrensmerkmale in Form von Vorrichtungsmerkmalen verzichtet. Diese Vorrichtungsmerkmale, die sich dem Fachmann unmittelbar erschließen, sollen dennoch als offenbart gelten.

Weitere Vorteile und Details von Ausführungsformen der Erfindung werden im Folgenden mit Bezug auf die Figuren erläutert.

Dabei zeigen

Figur 1    eine Ausführungsform eines mit einem Piezoelement ausgestatteten Fahrzeugrades;

Figur 2a    verschiedene Drehwinkel des Piezoelements bei einem neuen Reifen;

Figur 2b    verschiedene Drehwinkel des Piezoelements bei einem abgenutzten Reifen;

Figur 3    eine Krümmung eines Piezoelements während einer Radumdrehung;

Figur 4    eine Ausführungsform eines Signalverlaufs eines Piezoelements bei einem abgefahrenen Reifen im Vergleich zu einem neuen Reifen;

Figur 5    eine erste Ausführungsform eines erfindungsgemäßen Verfahrens zum Schätzen einer Profiltiefe eines Reifens;

Figur 6    einen möglichen Spannungsverlauf des Piezoelements in nicht kompensierter und in kompensierter Form;

Figur 7    eine zweite Ausführungsform eines erfindungsgemäßen Verfahrens zum Schätzen einer Profiltiefe eines Reifens;

Figur 8    einen möglichen Signalverlauf des Piezoelements;

Figur 9    ein Beispiel für Verhältnisse von ersten zu zweiten Summenwerten bei einem neuen und einem abgefahrenen Reifen;

Figur 10    eine dritte Ausführungsform eines erfindungsgemäßen Verfahrens zum Schätzen einer Profiltiefe eines Reifens;

Figur 11    einen möglichen Abstand des Piezoelements vom Radmittelpunkt bei einer Umdrehung des Rades;

Figur 12    ein Beispiel eines geometrischen Verlaufs des Piezoelements bei einem Abrollen des Reifens;

Figur 13    eine vierte Ausführungsform eines erfindungsgemäßen Verfahrens zum Schätzen einer Profiltiefe eines Reifens;

Figur 14    Frequenzen und Amplituden eines gemessenen Signals eines abgenutzten Reifens im Vergleich zu Frequenz und Amplituden eines neuen Reifens und

Figur 15    eine Ausführungsform einer erfindungsgemäßen Vorrichtung zum Schätzen einer Profiltiefe eines Reifens eines Fahrzeugs.

Bei den mit Bezug auf die Figuren gemachten Erläuterungen werden gleiche und wirkungsgleiche Merkmale mit demselben Bezugszeichen versehen, sofern nichts anderes angegeben ist.

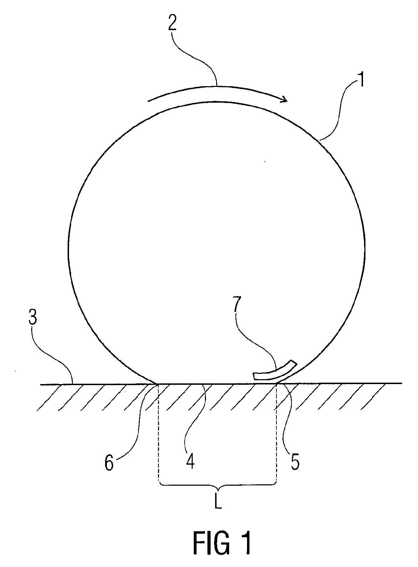

Die Figur 1 zeigt ein mit einem Piezoelement ausgestattetes Fahrzeugrad mit einem Reifen 1, der in der Rotationsrichtung 2 abrollt. Das Abrollverhalten ist hier in idealisierter Form auf einem ebenen Untergrund 3 dargestellt. Es entsteht eine abgeplattete Aufstandsfläche, die als Latsch 4 bezeichnet wird. Die Länge L des Latsches wird dabei vom Latscheintritt 5 bis zum Latschaustritt 6 gemessen. Die Form des Latsches 4 ist unter anderem abhängig von Reifenkenndaten, der Radlast, dem Reifendruck und der Geschwindigkeit des Fahrzeugs. In dem Reifen 1 ist eine Radeinheit 7 angeordnet. Diese umfasst unter anderem ein Piezoelement, das derartig an einer Innenseite des Reifens angeordnet ist, dass es sich bei einem Latschdurchlauf verformt. Insbesondere beim Latscheintritt 5 und beim Latschaustritt 6 kommt es durch den Knick zu einer intensiven Verformung des Piezoelements. Neben dem Piezoelement umfasst die Radeinheit 7 ferner eine Batterie, einen Prozessor, verschiedene Sensoren wie einen Luftdrucksensor, einen Temperatursensor und einen Beschleunigungssensor, eine Verarbeitungseinheit sowie eine Sendeeinrichtung.

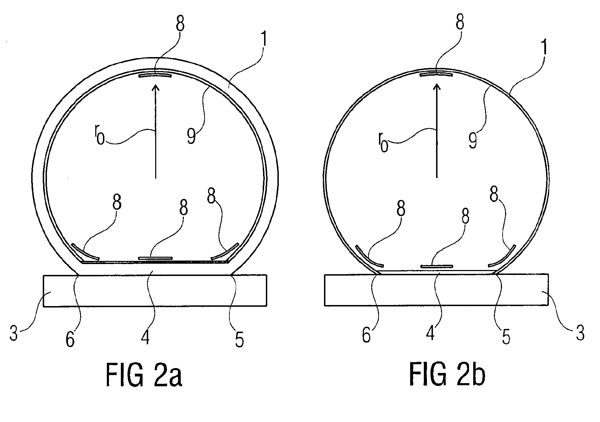

Wenn das Piezoelement durch eine mechanische Kraft verformt wird, erzeugt es eine elektrische Spannung, die ein Maß für die Verformung des Piezoelements darstellt. Die Figuren 2a und 2b zeigen das Piezoelement 8 an verschiedenen Positionen des Reifens 1. Der in der Figur 2a gezeigte Reifen 1 ist neu, während der in Figur 2b dargestellte Reifen 1 abgefahren ist. Das Piezoelement 8 ist an der neutralen Faser 9 des Reifens angeordnet. Diese neutrale Faser 9 zeichnet sich dadurch aus, dass sie sich zwar verformt, aber weder streckt noch kürzt. Der Reifenabrieb geschieht dabei außerhalb der neutralen Faser, so dass der Radius r0 der neutralen Faser 9 sowohl bei einem neuen, als auch einem abgefahrenen Reifen identisch ist.

Wie den Figuren 2a und 2b zu entnehmen ist, weist das Piezoelement 8, wenn es sich oben im Reifen befindet, eine normale Krümmung auf. Beim Latscheintritt 5 sowie beim Latschaustritt 6 ist das Piezoelement 8 im Vergleich zur normalen Krümmung stärker und in der Mitte des Latsches 4 schwächer gekrümmt.

Die beiden Figuren 2a und 2b lassen erahnen, dass der Knick im Latscheintritt 5 und im Latschaustritt 6 bei dem in Figur 2b gezeigten abgefahrenen Reifen schärfer ist als bei dem in Figur 2a dargestellten neuen Reifen, da das außerhalb der neutralen Faser 9 beim neuen Reifen reichlich vorhandene Gummi die Knickwirkung dämpft. Dieser Effekt kann zur Schätzung der Profiltiefe herangezogen werden.

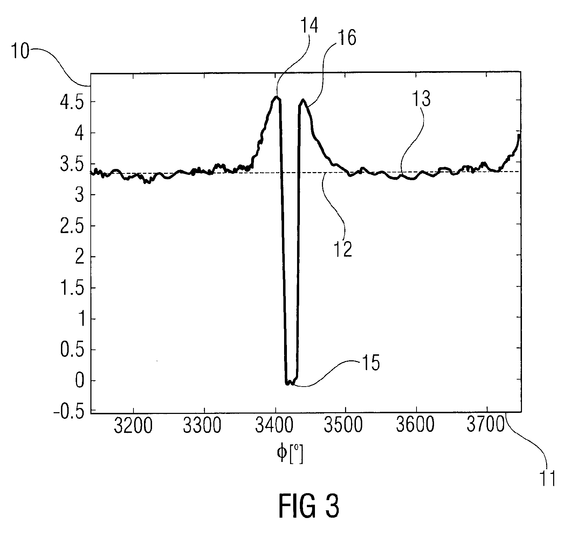

Die Figur 3 illustriert eine Krümmung des Piezoelements 8 während einer Radumdrehung. Auf der Ordinatenachse 10 ist die Krümmung des Piezoelements in der Einheit 1/Meter dargestellt. Dabei wurde ein Radius r0 von 30 cm unterstellt. Auf der Abszissenachse 11 ist der Drehwinkel $\Phi$ des Piezoelements 8 abgetragen. Die zehnte Umdrehung des Piezoelements reicht also von 3240 Grad bis 3600 Grad. Bei 3420 Grad befindet sich der Latsch 4, so dass das Piezoelement 8 eine Krümmung von 0 aufweist. Der Darstellung in Figur 3 ist damit auch zu entnehmen, dass sich der Bezugsschenkel vom Mittelpunkt des Reifens lotrecht nach oben erstreckt. Kurz vor dem Latsch, also beim Latscheintritt, und kurz nach dem Latsch, also beim Latschaustritt, kommt es zu Krümmungswerten die über einer normalen Krümmung liegen. Diese normale Krümmung, die mit 1/r0 beziffert werden kann, ist durch die Linie 12 angedeutet. Auf der Kurve 13 entspricht der Punkt 14 dem Latscheintritt 5, der Punkt 15 dem Latsch 4 und der Punkt 16 dem Latschaustritt 6.

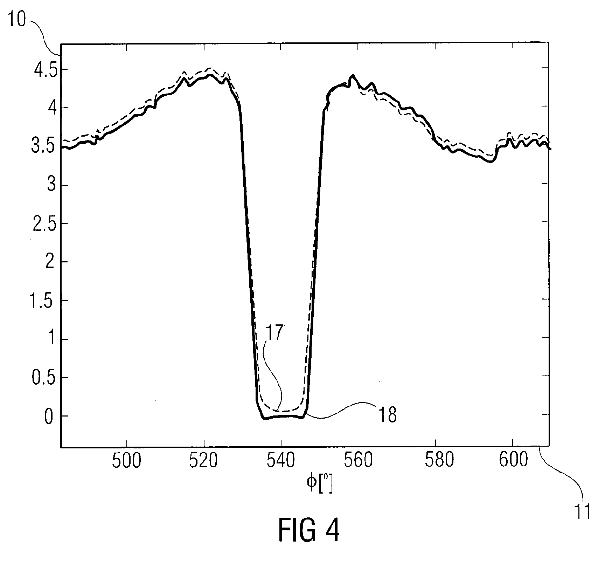

Die Figur 4 stellt noch einmal die Krümmung des Piezoelements 8 bei einem neuen Reifen 17 dem Krümmungsverlauf des Piezoelements bei einem abgefahrenen Reifen 18 gegenüber. Der Figur 4 ist deutlich zu entnehmen, dass der Krümmungsverlauf der Kurve 17 beim Latschein- und austritt runder ist. Dieser Effekt kann zum Schätzen der Profiltiefe ausgenutzt werden.

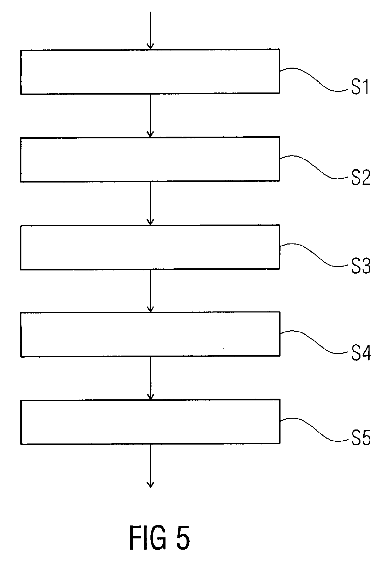

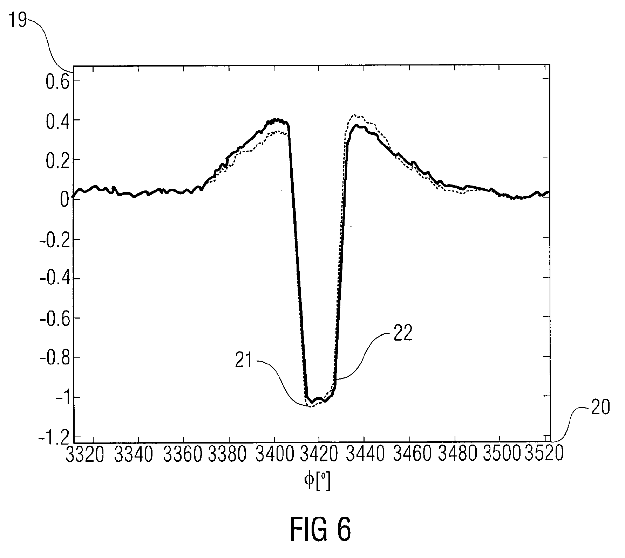

Figur 5 illustriert eine erste Ausführungsform eines erfindungsgemäßen Verfahrens zum Schätzen einer Profiltiefe eines Reifens eines Fahrzeugs. In Schritt S1 werden zunächst die Signale des Piezoelements gemessen. Dieses Piezoelement 8 ist, wie bereits ausgeführt wurde, an der Innenseite des Reifens 1 in einem Bereich angeordnet, der bei einem Latschdurchlauf verformt wird. In Schritt S2 werden dann aus den gemessenen Signalen in Form von Spannungswerten des Piezoelements Ist-Daten abgeleitet. Hierfür werden die gemessenen Spannungswerte kompensiert. Beispielsweise werden Ladungsverluste, die durch das Messen der Spannungswerte entstehen, berücksichtigt. Dies wird in Figur 6 verdeutlicht. Auf der Ordinatenachse 19 sind die Spannungswerte in Volt und auf der Abszissenachse 20 der Drehwinkel $\Phi$ des Piezoelements abgetragen. Die Kurve 21 entspricht den nicht kompensierten Spannungswerten und die Kurve 22 den kompensierten Spannungswerten. Wie der Kurve 21 entnommen werden kann, nimmt der Betrag des Spannungswertes im Latsch schnell ab. Da dies jedoch keiner Veränderung der Krümmung des Piezoelements entspricht, sondern auf Ladungsverluste durch die Messung zurückzuführen ist, wird diese Spannungsabnahme kompensiert. Der Zusammenhang zwischen der Verlustspannung $U_{Loss}$ und der gemessenen Piezospannung $U_P$ kann mittels der folgenden Differenzialgleichung beschrieben werden:

$$\frac{d}{dt}U_{Loss}(t) = C_L * U_p(t)$$

Die Konstante $C_L$ kann durch die Kapazität C des Piezoelements und den Gesamtverlustwiderstand R berechnet werden: $C_L = \left(\frac{1}{RC}\right)$.

In dem in Figur 5 gezeigten Schritt S3 werden dann die im Schritt S2 abgeleiteten Ist-Daten mit Vergleichsdaten verglichen. Im vorliegenden Beispiel entsprechen die Vergleichsdaten Kennlinien, die jeweils einer Profiltiefe zugeordnet sind und für jeweilige Drehwinkel des Piezoelements zu erwartende Ist-Daten angeben.

In Schritt S4 wird derjenige Datensatz der Vergleichsdaten, also diejenige Kennlinie, ermittelt, der die größte Ähnlichkeit mit den Ist-Daten aufweist. In Schritt S5 wird dann die Profiltiefe durch Ermitteln einer dem Datensatz zugeordneten Profiltiefe geschätzt. Ein Beispiel für eine Kennlinie ist die in Figur 4 mit 17 bezeichnete Kurve.

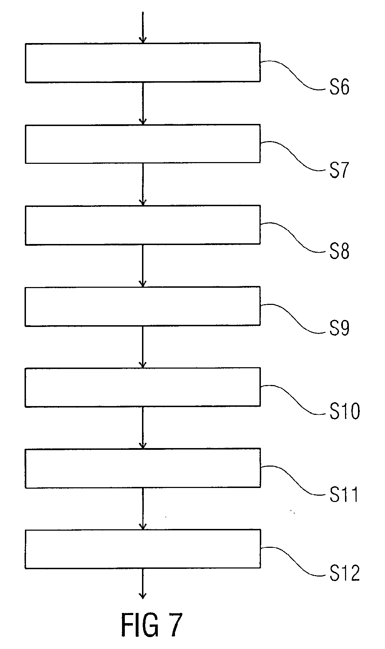

Figur 7 zeigt eine zweite Ausführungsform eines erfindungsgemäßen Verfahrens zum Schätzen einer Profiltiefe eines Reifens eines Fahrzeugs. In Schritt S6 werden zunächst Signale des Piezoelements gemessen. In den Schritten S7 bis S9 werden aus den gemessenen Signalen Ist-Daten abgeleitet. Zunächst wird in Schritt S7 ein erster Summenwert ermittelt durch Akkumulieren von Signalen, die einer schwächeren Krümmung des Piezoelements als einer Normalkrümmung des Piezoelements entsprechen. In Schritt S8 wird dann ein zweiter Summenwert ermittelt durch Akkumulieren von Signalen, die einer stärkeren Krümmung des Piezoelements als einer Normalkrümmung des Piezoelements entsprechen. Der erste und zweite Summenwert werden in Schritt S9 zueinander in ein Verhältnis gesetzt.

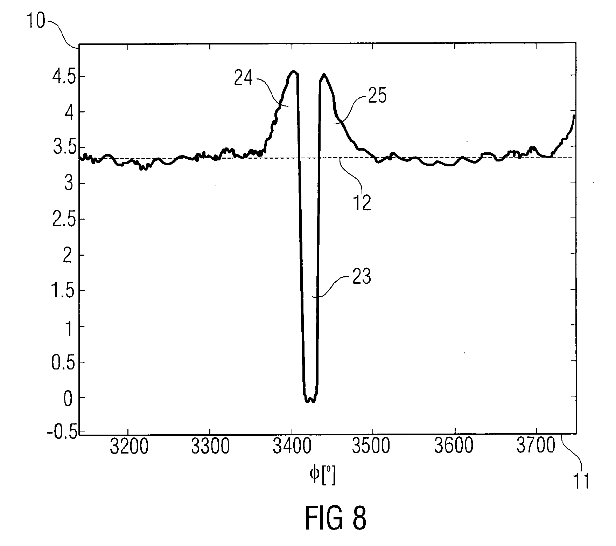

Diese Zusammenhänge sollen noch einmal mit Bezug auf Figur 8 erläutert werden. Figur 8 stellt eine Krümmung des Piezoelements in Abhängigkeit vom Drehwinkel des Piezoelements dar. Auf der Ordinatenachse 10 ist die Krümmung und auf der Abszissenachse 11 ist der Drehwinkel Φ des Piezoelements aufgetragen. Die Normalkrümmung ist mit Hilfe der Linie 12 dargestellt. Die Fläche 23 entspricht dem ersten Summenwert, da in diesem Bereich eine schwächere Krümmung des Piezoelements als eine Normalkrümmung vorliegt. Die Flächen 24 und 25 entsprechen dem zweiten Summenwert. Denn hier liegt eine stärkere Krümmung des Piezoelements als eine Normalkrümmung vor. Die Fläche 23 wird dann zu der Gesamtfläche von 24 und 25 ins Verhältnis gesetzt.

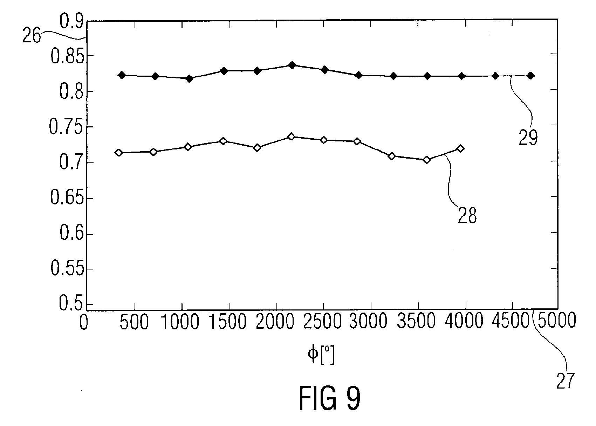

In Schritt S10 werden die so gewonnen Ist-Daten mit Vergleichsdaten verglichen. Figur 9 stellt diesen Zusammenhang dar. Auf der Ordinatenachse 26 ist das Verhältnis zwischen dem ersten und zweiten Summenwert aufgezeichnet. Auf der Abszissenachse 27 befindet sich wiederum der Drehwinkel Φ des Piezoelements. Die Punkte auf dem unteren Graphen 28 entsprechen den Verhältnissen zwischen dem ersten und dem zweiten Summenwert bei einem neuen Reifen und die Punkte auf dem oberen Graph 29 entsprechen diesen Verhältnis bei einem abgefahrenen Reifen. Somit ist deutlich erkennbar, dass das Verhältnis zwischen dem ersten und zweiten Summenwert bei einem neuen und einem abgefahrenen Reifen deutlich unterschiedlich ist.

In dem in Figur 7 gezeigten Schritt S11 wird der Datensatz der Vergleichsdaten ermittelt, der die größte Ähnlichkeit mit den Ist-Daten aufweist. In Schritt S12 wird dann die Profiltiefe durch Ermitteln einer dem Datensatz zugeordneten Profiltiefe geschätzt.

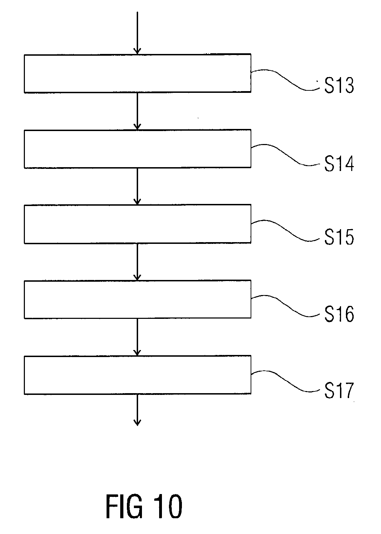

Figur 10 zeigt eine dritte Ausführungsform eines erfindungsgemäßen Verfahrens zum Schätzen einer Profiltiefe eines Reifens eines Fahrzeugs. In Schritt S13 werden Signale des Piezoelements gemessen, aus denen in Schritt S14 Ist-Daten abgeleitet werden. Vorliegend wird ein geometrischer Verlauf des Piezoelements bei einem Abrollen des Reifens ermittelt. Dies kann beispielsweise über die folgende Differenzialgleichung geschehen:

$$K(\phi) = \frac{r^2 + 2rr' - rr''}{(r^2 + r'^2)^{3/2}}$$

Hierbei ist K (Φ) die vom Drehwinkel des Piezoelements abhängige Krümmung. r bezeichnet den Radius, also den Abstand zwischen dem Piezoelement und dem Radmittelpunkt. r' ist die erste Ableitung von r nach dem Winkel Φ und r'' ist die zweite Ableitung von r nach dem Winkel Φ. Mithilfe der gemessenen Signale kann die Krümmung K (Φ) ermittelt werden. Durch Lösen der oben gezeigten Differenzialgleichung kann in Abhängigkeit des Drehwinkels Φ der Radius bestimmt werden. Damit liegen die Koordinaten vor, die den geometrischen Verlauf des Piezoelements beschreiben.

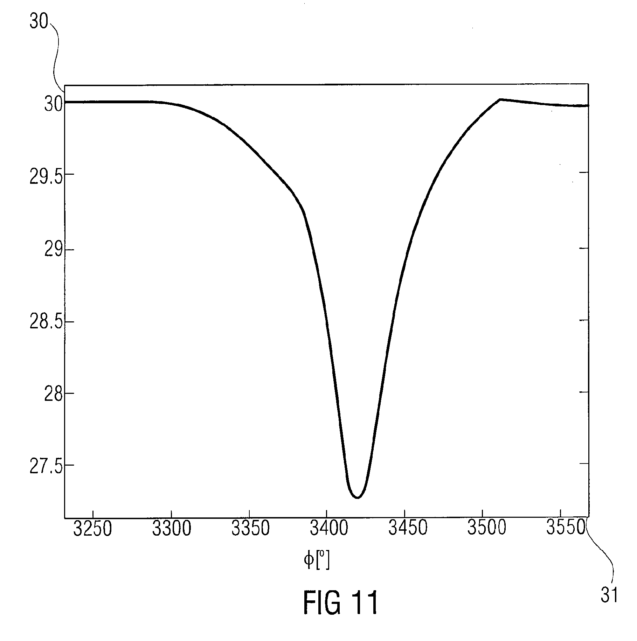

Figur 11 verdeutlicht diesen Zusammenhang. Auf der Ordinatenachse 30 ist der Radius r in cm und auf der Abszissenachse 31 der Drehwinkel Φ des Piezoelements dargestellt. Wie der Figur 11 entnommen werden kann, verringert sich im Bereich des Latsches der Abstand zwischen dem Piezoelement und dem Reifenmittelpunkt.

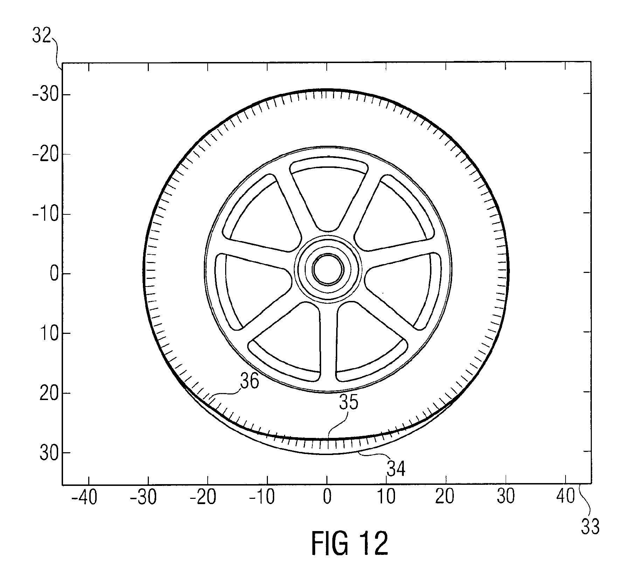

In der Figur 12 ist dieser Zusammenhang noch einmal anders dargestellt. Auf der Ordinatenachse 32 und Abszissenachse 33 sind jeweils Längenmaße in cm aufgetragen. Die Kurve 34 verdeutlicht einen perfekten Kreis mit dem Radius r0. Die Kurve 35 stellt den geometrischen Verlauf des Piezoelements dar. Das Krümmungsfeld ist durch die Kurve 36 angedeutet.

In dem in Figur 10 dargestellten Schritt S15 werden die so gewonnen Ist-Daten, also der geometrische Verlauf des Piezoelements, mit Vergleichsdaten verglichen. In Schritt S16 wird der Datensatz der Vergleichsdaten ermittelt, der die größte Ähnlichkeit mit den Ist-Daten aufweist. Die Profiltiefe wird dann in Schritt S17 durch Ermitteln einer dem ermittelten Datensatz zugeordneten Profiltiefe geschätzt.

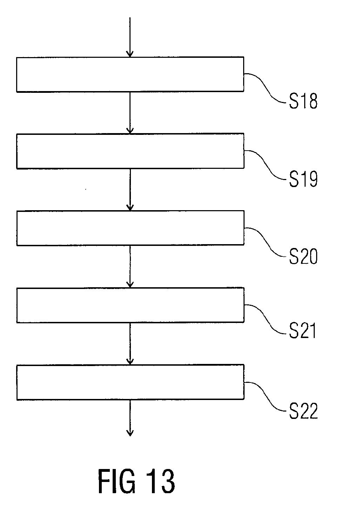

Figur 13 illustriert eine vierte Ausführungsform eines erfindungsgemäßen Verfahrens zum Schätzen einer Profiltiefe eines Reifens eines Fahrzeugs. In Schritt S18 werden Signale des Piezoelements gemessen, aus denen in Schritt S19 Ist-Daten abgeleitet werden. Im vorliegenden Beispiel erfolgt dies durch eine Spektralanalyse der gemessenen Signale, um die in den Signalen enthaltenen Frequenzen und deren Amplituden zu ermitteln. In Schritt S20 werden die so abgeleiteten Ist-Daten mit den Vergleichsdaten verglichen.

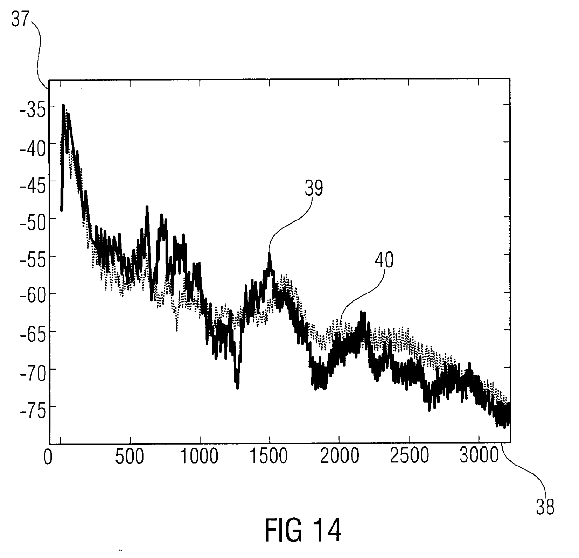

Dieser Vorgang ist in Figur 14 noch einmal illustriert. Auf der Ordinatenachse 37 ist die Amplitude in Dezibel und auf der Abszissenachse 38 ist die Frequenz in Hertz aufgetragen. Die Kurve 39 entspricht den Ist-Daten eines abgefahrenen Reifens, während die Kurve 40 die Vergleichsdaten eines neuen Reifens repräsentieren. Wie der Figur 14 zu entnehmen ist, unterscheiden sich die Kurven 39 und 40 deutlich, so dass auch aufgrund einer Spektralanalyse ein abgefahrener Reifen von einem neuen Reifen unterschieden werden kann.

Vorzugsweise werden nur diejenigen gemessenen Signale in die Spektralanalyse einbezogen, die in einem Drehwinkelbereich des Piezoelements entstehen, der in einer Drehrichtung des Reifens zwischen einem Drehwinkel, bei dem ein Latschaustritt des Piezoelements erfolgt, und ein Drehwinkel, bei dem ein Latscheintritt des Piezoelements erfolgt, liegt. In der Praxis kann es zu einer Konvolution der Schwingungen, die dem Latschdurchlauf zuzuordnen sind, mit den übrigen Schwingungen kommen. Die Signale, die entstehen, während sich das Piezoelement im Latsch befindet, sollen ausgeblendet werden. Mit Hilfe eines homomorphen Filters können die einzelnen Schwingungen separiert und anschließend ausgewertet werden.

In dem in Figur 13 gezeigten Schritt S21 wird dann der Datensatz der Vergleichsdaten ermittelt, der die größte Ähnlichkeit mit den Ist-Daten aufweist. Durch Ermitteln der dem Datensatz zugeordneten Profiltiefe wird dann in Schritt S22 die Profiltiefe geschätzt.

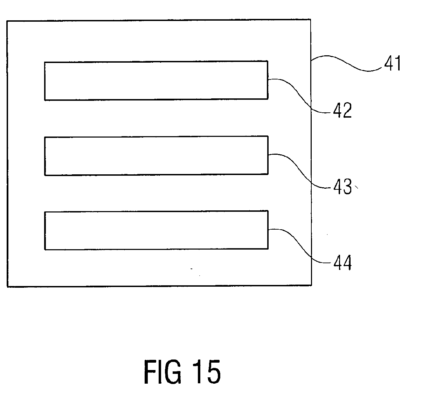

Figur 15 zeigt eine Ausführungsform einer erfindungsgemäßen Vorrichtung zum Schätzen einer Profiltiefe eines Reifens eines Fahrzeugs während eines Betriebs des Fahrzeugs. Die gezeigte Ausführungsform 41 umfasst eine Messeinrichtung 42 zum Messen von Signalen eines Piezoelements, das an einer Innenseite des Reifens in einem Bereich angeordnet ist, der bei einem Latschdurchlauf verformt wird. Darüber hinaus umfasst die Vorrichtung 41 eine Vergleichseinrichtung 43 zum Vergleichen der Signale oder von aus den Signalen abgeleiteten Ist-Daten mit Vergleichsdaten und eine Schätzeinrichtung 44 zum Schätzen der Profiltiefe aufgrund des Vergleichs der Signale oder der Ist-Daten mit den Vergleichsdaten. Die Vergleichsdaten können Datensätze enthalten, die jeweils für eine Profiltiefe zu erwartende Signale oder zu erwartende Ist-Daten angeben.

Bezugszeichenliste

| 1 | Reifen |
|---|---|
| 2 | Rotationsrichtung |
| 3 | Untergrund |
| 4 | Latsch |
| 5 | Latscheintritt |
| 6 | Latschaustritt |
| 7 | Radeinheit |
| 8 | Piezoelement |
| 9 | neutrale Faser |
| 10 | Ordinatenachse, auf der die Krümmung in 1/Meter angegeben ist |
| 11 | Abszissenachse, auf der der Drehwinkel Φ des Piezoelements aufgetragen ist |
| 12 | normale Krümmung $\left(\dfrac{1}{r0}\right)$ |
| 13 | Krümmungsgraph |
| 14 | Latscheintritt |
| 15 | Latsch |
| 16 | Latschaustritt |
| 17 | Krümmungsgraph eines neuen Reifens |
| 18 | Krümmungsgraph eines abgefahrenen Reifens |
| 19 | Ordinatenachse, auf der die Spannung in Volt aufgetragen ist |
| 20 | Abszissenachse auf der der Drehwinkel Φ des Piezoelements aufgetragen ist |
| 21 | unkompensierter Spannungsverlauf |
| 22 | kompensierter Spannungsverlauf |
| 23 | Fläche, die einem ersten Summenwert entspricht, der durch Akkumulieren von Signalen ermittelt wird, die einer schwächeren Krümmung des Piezoelements als einer Normalkrümmung des Piezoelements entsprechen |
| 24, 25 | Flächen, die dem zweiten Summenwert entsprechen, der durch Akkumulieren von Signalen ermittelt wird, die einer stärkeren Krümmung des Piezoelements als einer Normalkrümmung des Piezoelements entsprechen |
| 26 | Ordinatenachse, auf der das Verhältnis zwischen erstem und zweitem Summenwert aufgetragen ist |
| 27 | Abszissenachse, auf der der Drehwinkel Φ des Piezoelements aufgetragen ist |
| 28 | Verhältnisse zwischen erstem und zweitem Summenwert eines neuen Reifens |
| 29 | Verhältnisse zwischen erstem und zweitem Summenwert eines abgefahrenen Reifens |
| 30 | Ordinatenachse, auf der der Radius in cm aufgetragen ist |
| 31 | Abszissenachse, auf der der Drehwinkel Φ des Piezoelements aufgetragen ist |
| 32 | Ordinatenachse mit Längenmaß in cm |
| 33 | Abszissenachse mit Längenmaß in cm |
| 34 | perfekter Kreis mit Radius r0 |
| 35 | geometrischer Verlauf des Piezoelements |
| 36 | Krümmungsfeld |
| 37 | Ordinatenachse, auf der die Amplitude in Dezibel aufgetragen ist |
| 38 | Abszissenachse, auf der die Frequenz in Hertz aufgetragen ist |
| 39 | Spektralanalyse bei einem abgefahrenen Reifen |
| 40 | Spektralanalyse bei einem neuen Reifen |
| 41 | Ausführungsform einer erfindungsgemäßen Vorrichtung |
| 42 | Messeinrichtung |

| | |
|---|---|
| 43 | Vergleichseinrichtung |
| 44 | Schätzeinrichtung |
| L | Länge des Latsches |
| S1 | Messen von Signalen eines Piezoelements |
| S2 | Ableiten von Ist-Daten aus den gemessenen Signalen durch Kompensieren der gemessenen Spannungswerte |
| S3 | Vergleichen der Ist-Daten mit Vergleichsdaten |
| S4 | Ermitteln eines Datensatzes der Vergleichsdaten, der die größte Ähnlichkeit mit den Ist-Daten aufweist. |
| S5 | Schätzen der Profiltiefe durch Ermitteln der dem Datensatz zugeordneten Profiltiefe |
| S6 | Messen von Signalen eines Piezoelements |
| S7 | Ermitteln eines ersten Summenwertes durch Akkumulieren von Signalen, die einer schwächeren Krümmung des Piezoelements als einer Normalkrümmung des Piezoelements entsprechen |
| S8 | Ermitteln eines zweiten Summenwertes durch Akkumulieren von Signalen, die einer stärkeren Krümmung des Piezoelements als einer Normalkrümmung des Piezoelements entsprechen |
| S9 | Ermitteln eines Verhältnisses zwischen dem ersten und dem zweiten Summenwert |
| S10 | Vergleichen der Ist-Daten mit den Vergleichsdaten |
| S11 | Ermitteln eines Datensatzes der Vergleichsdaten, der die größte Ähnlichkeit mit den Ist-Daten aufweist |
| S12 | Schätzen der Profiltiefe durch Ermitteln der dem Datensatz zugeordneten Profiltiefe |
| S13 | Messen von Signalen eines Piezoelements |
| S14 | Ableiten von Ist-Daten aus den gemessenen Signalen durch Ermitteln eines geometrischen Verlaufs des Piezoelements |
| S15 | Vergleichen der Ist-Daten mit Vergleichsdaten |
| S16 | Ermitteln eines Datensatzes der Vergleichsdaten der die größte Ähnlichkeit mit den Ist-Daten aufweist |
| S17 | Schätzen der Profiltiefe durch Ermitteln der dem Datensatz zugeordneten Profiltiefe |
| S18 | Messen von Signalen eines Piezoelements |
| S19 | Ableiten von Ist-Daten aus den gemessenen Signalen durch Spektralanalyse der gemessenen Signale, um die in den Signalen enthaltenen Frequenzen und deren Amplituden zu ermitteln |
| S20 | Vergleichen der Ist-Daten mit Vergleichsdaten |
| S21 | Ermitteln eines Datensatzes der Vergleichsdaten der die größte Ähnlichkeit mit den Ist-Daten aufweist |
| S22 | Schätzen der Profiltiefe durch Ermitteln der dem Datensatz zugeordneten Profiltiefe |

**Patentansprüche**

1. Verfahren zum Schätzen einer Profiltiefe eines Reifens (1) eines Fahrzeugs während eines Betriebs des Fahrzeugs mit den Schritten

    - Messen von Signalen eines Piezoelements (S1, S6, S13, S18), das an einer Innenseite des Reifens in einem Bereich angeordnet ist, der bei einem Latschdurchlauf verformt wird,
    - Ableiten von Ist-Daten aus den gemessenen Signalen (S2, S7, S8, S9, S14, S19)
    - Vergleichen der aus den Signalen abgeleiteten Ist-Daten mit Vergleichsdaten (S3, S10, S15, S20), wobei die Vergleichsdaten Datensätze enthalten, die jeweils für eine Profiltiefe zu erwartende Ist-Daten angeben, und
    - Schätzen der Profiltiefe (S5, S12, S17, S22) aufgrund des Vergleichs der Ist-Daten mit den Vergleichsdaten,

    **dadurch gekennzeichnet, dass**
der Schritt des Ableitens von Ist-Daten aus den gemessenen Signalen die Schritte umfasst

    - Ermitteln eines ersten Summenwerts (S7) durch Akkumulieren von Signalen, die einer schwächeren Krümmung des Piezoelements als einer Normalkrümmung des Piezoelements entsprechen, und/oder
    - Ermitteln eines zweiten Summenwerts (S8) durch Akkumulieren von Signalen, die einer stärkeren Krümmung des Piezoelements als einer Normalkrümmung des Piezoelements entsprechen.

2. Verfahren nach Anspruch 1, mit den Schritten

    - Ermitteln eines Datensatzes der Vergleichsdaten (S4, S11, S16, S21), der die größte Ähnlichkeit mit den Ist-Daten aufweist, und
    - Schätzen der Profiltiefe (S5, S12, S17, S22) durch Ermitteln einer dem Datensatz zugeordneten Profiltiefe.

3. Verfahren nach Anspruch 1 oder 2, wobei als Signale Spannungswerte des Piezoelements (8) gemessen werden und der Schritt des Ableitens von Ist-Daten aus den gemessenen Signalen den Schritt umfasst Kompensieren der gemessenen Spannungswerte (S2) um mindestens einen Einflussfaktor, der von einem Reifendruck, von einer Reifentemperatur, von einer Reifensteifigkeit, von einer Beladung des Fahrzeugs und/oder von Ladungsverlusten, die durch das Messen der Spannungswerte entstehen, abhängig ist.

4. Verfahren nach einem der vorhergehendenAnsprü-

che, wobei jeder Datensatz einer Kennlinie entspricht, die für jeweilige Drehwinkel (Φ) des Piezoelements bei der dem Datensatz zugeordneten Profiltiefe zu erwartende Ist-Daten angibt, wobei unter einem Drehwinkel des Piezoelements ein Drehwinkel zwischen einem Schenkel, der sich von einem Mittelpunkt des Reifens durch das Piezoelement erstreckt, und einem Bezugsschenkel, der sich vom Mittelpunkt des Reifens in eine vorherbestimmte Richtung erstreckt, zu verstehen ist.

5. Verfahren nach Anspruch 4, wobei die Ist-Daten mit den Kennlinien in einem Drehwinkelbereich des Piezoelements verglichen werden, in dem ein Latscheintritt (5) des Piezoelements und/oder ein Latschaustritt (6) des Piezoelements erfolgt.

6. Verfahren nach einem der vorhergehenden Ansprüche, wobei der Schritt des Ableitens von Ist-Daten aus den gemessenen Signalen den Schritte umfasst

   - Ermitteln eines Verhältnisses zwischen dem ersten und dem zweiten Summenwert (S9).

7. Verfahren nach einem der vorhergehenden Ansprüche, wobei die Vergleichsdaten für verschiedene Profiltiefen zu erwartende erste Summenwerte oder zu erwartende Verhältnisse zwischen dem ersten und dem zweiten Summenwert angeben.

8. Verfahren zum Warnen eines Fahrers des Fahrzeugs mit den Schritten des Verfahrens nach einem der vorhergehenden Ansprüche und den zusätzlichen Schritten

   - Vergleichen der geschätzten Profiltiefe mit einem Schwellwert und
   - Ausgeben eines Warnsignals an den Fahrer, wenn die geschätzte Profiltiefe den Schwellwert unterschreitet.

9. Vorrichtung (41) zum Schätzen einer Profiltiefe eines Reifens (1) eines Fahrzeugs während eines Betriebs des Fahrzeugs mit

   - einer Messeinrichtung (42) zum Messen von Signalen eines Piezoelements (8), das an einer Innenseite des Reifens in einem Bereich angeordnet ist, der bei einem Latschdurchlauf verformt wird,
   - Mitteln zum Ableiten von Ist-Daten aus den gemessenen Signalen,
   - einer Vergleichseinrichtung (43) zum Vergleichen der aus den Signalen abgeleiteten Ist-Daten mit Vergleichsdaten, wobei die Vergleichsdaten Datensätze enthalten, die jeweils für eine Profiltiefe zu erwartende Ist-Daten angeben, und

- einer Schätzeinrichtung (44) zum Schätzen der Profiltiefe aufgrund des Vergleichs der Ist-Daten mit den Vergleichsdaten, **dadurch gekennzeichnet, dass**

die Mittel zum Ableiten von Ist-Daten aus den gemessenen Signalen Mittel zum Ermitteln eines ersten Summenwertes durch Akkumulieren von Signalen, die einer schwächeren Krümmung des Piezoelements als einer Normalkrümmung des Piezoelements entsprechen, und/oder Mittel zum Ermitteln eines zweiten Summenwerts durch Akkumulieren von Signalen, die einer stärkeren Krümmung des Piezoelements als einer Normalkrümmung des Piezoelements entsprechen, umfassen.

**Claims**

1. Method for estimating a profile depth of a tire (1) of a vehicle during the operation of the vehicle with the steps

   - measurement of signals of a piezoelectric element (S1, S6, S13, S18) that is disposed on the inside of the tire in a region that is deformed when passing through a contact area,
   - deriving actual data from the measured signals (S2, S7, S8, S9, S14, S19),
   - comparing the actual data derived from the signals with comparison data (S3, S10, S15, S20), the comparison data containing records that indicate actual data to be expected for each profile depth, and
   - estimating the profile depth (S5, S12, S17, S22) based on the comparison of the actual data with the comparison data, **characterized in that** the step of deriving actual data from the measured signals comprises the steps
   - determining a first summation value (S7) by accumulating signals corresponding to a gentler curvature of the piezoelectric element than a normal curvature of the piezoelectric element, and/or
   - determining a second summation value (S8) by accumulating signals corresponding to a tighter curvature of the piezoelectric element than a normal curvature of the piezoelectric element.

2. Method according to Claim 1, with the steps

   - determining a record of the comparison data (S4, S11, S16, S21) that has the greatest similarity to the actual data, and
   - estimating the profile depth (S5, S12, S17, S22) by determining a profile depth associated with the record.

3. Method according to Claim 1 or 2, wherein voltage values of the piezoelectric element (8) are measured as signals and the step of deriving actual data from the measured signals comprises the step of compensating the measured voltage values (S2) by at least one influencing factor that is dependent on a tire pressure, on a tire temperature, on a tire rigidity, on a loading of the vehicle and/or on charge losses arising as a result of the measurement of the voltage values.

4. Method according to any one of the preceding claims, wherein each record corresponds to a characteristic curve that indicates actual data to be expected at the profile depth associated with the record for each rotation angle ($\Phi$) of the piezoelectric element, a rotation angle of the piezoelectric element meaning a rotation angle between a line that extends from a central point of the tire through the piezoelectric element and a reference line that extends from the central point of the tire in a predetermined direction.

5. Method according to Claim 4, wherein the actual data are compared with the characteristics in a rotation angle region of the piezoelectric element in which entry of the piezoelectric element into the contact area (5) and/or exiting of the piezoelectric element from the contact area (6) occurs.

6. Method according to any one of the preceding claims, wherein the step of deriving actual data from the measured signals comprises the steps

   - determining a ratio between the first and the second summation values (S9).

7. Method according to any one of the preceding claims, wherein the comparison data indicate first summation values to be expected or ratios between the first and the second summation values to be expected for different profile depths.

8. Method for warning a driver of the vehicle with the steps of the method according to any one of the preceding claims and the additional steps

   - comparing the estimated profile depth with a threshold value
   and
   - outputting a warning signal to the driver if the estimated profile depth is below the threshold value.

9. Device (41) for estimating a profile depth of a tire (1) of a vehicle during the operation of the vehicle with

   - a measuring device (42) for measurement of signals of a piezoelectric element (8) that is disposed on the inside of the tire in a region that is deformed when passing through a contact area,
- means for deriving actual data from the measured signals,
- a comparing device (43) for comparing the signals or actual data derived from the signals with comparison data, the comparison data containing records that indicate actual data to be expected for each profile depth, and
- an estimating device (44) for estimating the profile depth based on the comparison of the actual data with the comparison data, **characterized in that** the means for deriving actual data from the measured signals comprise means for determining a first summation value by accumulating signals corresponding to a gentler curvature of the piezoelectric element than a normal curvature of the piezoelectric element, and/or means for determining a second summation value by accumulating signals corresponding to a tighter curvature of the piezoelectric element than a normal curvature of the piezoelectric element.

## Revendications

1. Procédé d'estimation de la profondeur de profilé d'un pneu (1) d'un véhicule pendant une utilisation du véhicule, comprenant les étapes suivantes

   - mesure des signaux d'un élément piézoélectrique (S1, S6, S13, S18) qui est disposé sur un côté intérieur du pneu dans une zone qui est déformée lors du passage sur un aplatissement,
   - dérivation de données réelles à partir des signaux mesurés (S2, S7, S8, S9, S14, S19),
   - comparaison des données réelles dérivées à partir des signaux avec des données de comparaison (S3, S10, S15, S20), les données de comparaison contenant des jeux de données qui indiquent respectivement les données réelles à attendre pour une profondeur de profilé, et
   - estimation de la profondeur de profilé (S5, S12, S17, S22) en se basant sur la comparaison des données réelles avec les données de comparaison,

   **caractérisé en ce que**
   l'étape de dérivation des données réelles à partir des signaux mesurés comprend les étapes suivantes

   - détermination d'une première valeur cumulée (S7) par totalisation des signaux qui correspondent à une courbure plus faible de l'élément piézoélectrique qu'une courbure normale de l'élément piézoélectrique, et/ou

- détermination d'une deuxième valeur cumulée (S8) par totalisation des signaux qui correspondent à une courbure plus forte de l'élément piézoélectrique qu'une courbure normale de l'élément piézoélectrique.

2. Procédé selon la revendication 1, comprenant les étapes suivantes

   - détermination d'un jeu de données des données de comparaison (S4, S11, S16, S21) qui présente la plus grande similitude avec les données réelles, et
   - estimation de la profondeur de profilé (S5, S12, S17, S22) par détermination d'une profondeur de profilé associée au jeu de données.

3. Procédé selon la revendication 1 ou 2, selon lequel les signaux mesurés sont des valeurs de tension de l'élément piézoélectrique (8) et l'étape de dérivation des données réelles à partir des signaux mesurés comprend l'étape de compensation des valeurs de tension mesurées (S2) par au moins un facteur d'influence qui est dépendant d'une pression de pneu, d'une température de pneu, d'une rigidité de pneu, d'un chargement du véhicule et/ou de pertes de charge qui sont produites par la mesure des valeurs de tension.

4. Procédé selon l'une des revendications précédentes, selon lequel chaque jeu de données correspond à une courbe caractéristique qui indique, pour l'angle de rotation (Φ) correspondant de l'élément piézoélectrique, les données réelles à attendre avec la profondeur de profilé associée au jeu de données, un angle de rotation de l'élément piézoélectrique désignant ici un angle de rotation entre une branche, qui s'étend depuis un point central du pneu à travers l'élément piézoélectrique, et une branche de référence, qui s'étend depuis le point central du pneu dans une direction préalablement définie.

5. Procédé selon la revendication 4, selon lequel les données réelles sont comparées avec les courbes caractéristiques dans une plage d'angles de rotation de l'élément piézoélectrique, dans laquelle a lieu une entrée en aplatissement (5) de l'élément piézoélectrique et/ou une sortie d'aplatissement (6) de l'élément piézoélectrique.

6. Procédé selon l'une des revendications précédentes, selon lequel l'étape de dérivation de données réelles à partir des signaux mesurés comprend l'étape de

   - détermination d'un rapport entre la première et la deuxième valeur cumulée (S9).

7. Procédé selon l'une des revendications précédentes, selon lequel les données de comparaison indiquent les premières valeurs cumulées à attendre pour différentes profondeurs de profilé ou les rapports à attendre entre la première et la deuxième valeur cumulée.

8. Procédé d'avertissement d'un conducteur du véhicule comprenant les étapes du procédé selon l'une des revendications précédentes et les étapes supplémentaires suivantes

   - comparaison de la profondeur de profilé estimée avec une valeur de seuil et
   - délivrance d'un signal d'avertissement au conducteur lorsque la profondeur de profilé estimée devient inférieure à la valeur de seuil.

9. Dispositif (41) d'estimation de la profondeur de profilé d'un pneu (1) d'un véhicule pendant une utilisation du véhicule, comprenant

   - un dispositif de mesure (42) destiné à mesurer des signaux d'un élément piézoélectrique (8) qui est disposé sur un côté intérieur du pneu dans une zone qui est déformée lors du passage sur un aplatissement,
   - des moyens pour dériver des données réelles à partir des signaux mesurés,
   - un appareil comparateur (43) destiné à comparer les données réelles dérivées à partir des signaux avec des données de comparaison, les données de comparaison contenant des jeux de données qui indiquent respectivement les données réelles à attendre pour une profondeur de profilé, et
   - un appareil d'estimation (44) destiné à estimer la profondeur de profilé en se basant sur la comparaison des données réelles avec les données de comparaison,

   **caractérisé en ce que**
   les moyens de dérivation des données réelles à partir des signaux mesurés comprennent des moyens destinés à déterminer une première valeur cumulée par totalisation de signaux qui correspondent à une courbure plus faible de l'élément piézoélectrique qu'une courbure normale de l'élément piézoélectrique, et/ou des moyens destinés à déterminer une deuxième valeur cumulée par totalisation de signaux qui correspondent à une courbure plus forte de l'élément piézoélectrique qu'une courbure normale de l'élément piézoélectrique.

FIG 1

FIG 2a

FIG 2b

FIG 3

FIG 4

FIG 5

FIG 6

FIG 7

FIG 8

FIG 9

S13

S14

S15

S16

S17

# FIG 10

FIG 11

FIG 12

FIG 13

FIG 14

FIG 15

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008002722 A1
- EP 1225066 A2
- EP 1314580 A1
- DE 102008057542 A1
- DE 102006028411 A1
- JP 2007153034 A
- US 5749984 A